# EUROPÄISCHE PATENTSCHRIFT

(11) **EP 1 141 555 B1**
(45) Veröffentlichungstag und Bekanntmachung des Hinweises auf die Patenterteilung: **01.06.2005**
(21) Anmeldenummer: 99963529.5
(22) Anmeldetag: 14.12.1999
(51) Int. Cl.: F15C 5/00

(54) **ANSCHLUSSKUPPLUNG FÜR PLATTENFÖRMIGE MIKROKOMPONENTEN**
CONNECTION COUPLING FOR PLATE-SHAPED MICROCOMPONENTS
COUPLAGE DE RACCORDEMENT POUR MICROCOMPOSANTS PLATS

(30) Priorität: 24.12.1998 DE 19860220
(43) Veröffentlichungstag der Anmeldung: 10.10.2001
(73) Patentinhaber: MERCK PATENT GmbH, 64293 Darmstadt (DE)
(72) Erfinder: WURZIGER, Hanns, D-64291 Darmstadt (DE); SCHMELZ, Michael, D-64347 Griesheim (DE); SCHWESINGER, Norbert, D-98693 Ilmenau (DE)
(86) Internationale Anmeldenummer: PCT/EP1999/009918
(87) Internationale Veröffentlichungsnummer: WO 2000/039469

(56) Entgegenhaltungen:
- EP-A- 0 040 186
- US-A- 4 118 280
- US-A- 4 157 195
- US-A- 5 349 979
- US-A- 5 519 635

## Beschreibung

Die Erfindung betrifft eine Anschlußkupplung für plattenförmige Mikrokomponenten, mit mindestens einem Leitungsanschluß für flüssige oder gasförmige Stoffe.

Plattenförmige Mikrokomponenten, wie Mikromischer, Mikropumpen, Mikroventile od. dgl., dienen zur Durchführung von chemischen Reaktionen mit geringsten Massenströmen. Der Einsatz von Mikrokomponenten ermöglicht eine exakte Temperaturkontrolle und gute Durchmischung, so daß eine wesentlich genauere Prozeßkontrolle bei erhöhter Sicherheit ermöglicht wird.

Üblicherweise bestehen die Mikrokomponenten aus mehreren aufeinanderliegenden planparallelen Platten, die in ihren aufeinanderliegenden Oberflächen die für die erforderliche Funktion benötigten Strukturen enthalten. Wegen der guten thermischen Leitfähigkeit und der Strukturierbarkeit bestehen diese Platten üblicherweise aus Silizium (sog. Siliziumwafer), die im Inneren eine der Funktion der Mikrokomponente angepaßten Geometrie enthalten. Daneben ist aber auch der Einsatz anderer, chemisch beständiger und den Einsatzbedingungen angepaßter Werkstoffe möglich.

Wegen der eingeschränkten mechanischen Festigkeit von Silizium müssen Zug- und Biegebeanspruchungen der plattenförmigen Mikrokomponente weitestmöglich vermieden werden. Schwierigkeiten bereitet die Anbringung der Leitungsanschlüsse zur Zuleitung und Ableitung der zu mischenden oder zu fördernden flüssigen oder gasförmigen Stoffe. Einerseits muß eine genaue Positionierung in Bezug auf die aus der Plattenoberfläche austretenden Leitungsbohrungen gewährleistet sein; andererseits besteht die Gefahr, daß bei der Anbringung der Leitungsanschlüsse oder bei der Montage bzw. Demontage der Mikrokomponente über diese Leitungsanschlüsse unzulässige Biegebeanspruchungen eingeleitet werden.

Aufgabe der Erfindung ist es daher, eine Anschlußkupplung der eingangs genannten Gattung zu schaffen, die es ermöglicht, in konstruktiv einfacher Weise einen Leitungsanschluß herzustellen, ohne hierbei im wesentlichen Umfang Biegebeanspruchungen in die plattenförmigen Mikrokomponente einzuleiten.

Diese Aufgabe wird erfindungsgemäß dadurch gelöst, daß ein im Querschnitt im wesentlichen U-förmiger Kupplungskörper in einer oberen Schenkelplatte eine den Leitungsanschluß aufnehmende Gewindebohrung aufweist, daß ein Randsteg die obere Schenkelplatte mit einer parallel und mit Abstand angeordneten unteren Schenkelplatte biegesteif verbindet, und daß Anschlagmittel zur Positionierung der plattenförmigen Mikrokomponente vorgesehen sind, die zwischen der oberen Schenkelplatte und der unteren Schenkelplatte aufnehmbar ist.

Der U-förmige Kupplungskörper umgreift den Rand der anzuschließenden plattenförmigen Mikrokomponente. Durch das Einschrauben des Leitungsanschlusses in die Gewindebohrung wird der Leitungsanschluß auf die Leitungsbohrung in der Oberfläche der Mikrokomponente gedrückt. Dadurch wird eine sichere und dichte Verbindung des Leitungsanschlusses mit der Mikrokomponente erreicht. Die erforderliche genaue Positionierung erfolgt durch die an der Anschlußkupplung vorgesehenen Anschlagmittel.

Gemäß einer bevorzugten Ausführungsform der Erfindung ist vorgesehen, daß die Innenfläche des Randstegs einen Queranschlag für eine Kante der plattenförmigen Mikrokomponente bildet und daß mindestens ein weiteres Anschlagmittel als Längsanschlag vorgesehen ist.

Die gegenüber der Anschlußkupplung zu zentrierende plattenförmige Mikrokomponente wird hierbei in der einen Richtung (in diesem Zusammenhang als "quer" bezeichnet) durch die Anlage ihrer Kante am Randsteg des Kupplungskörpers festgelegt. Die Festlegung in der anderen, rechtwinklig hierzu verlaufenden Richtung (in diesem Zusammenhang als "längs" bezeichnet) erfolgt durch einen zusätzlichen Längsanschlag. Damit ist eine sichere und eindeutige Positionierung der Mikrokomponente in beiden Richtungen ihrer Plattenebene relativ zu der Anschlußkupplung gewährleistet.

Den Längsanschlag für die eine Kante der plattenförmigen Mikrokomponente bildet vorzugsweise eine sich rechtwinklig zum Randsteg erstreckende Endwand des Kupplungskörpers.

Besonders vorteilhaft ist es, wenn die Endwand eine kraftübertragende Verbindung der oberen Schenkelplatte mit der unteren Schenkelplatte bildet. Zusammen mit dem die beiden Schenkelplatten verbindenden Randsteg wird hierbei eine besonders formsteife Verbindung der beiden Schenkelplatten erreicht, so daß durch die beim Einschrauben des Leitungsanschlusses gegen die aufgenommene Mikrokompcnente ausgeübte Kraft nur zu einer geringen Aufbiegung des Kupplungskörpers führt.

Eine weitere vorteilhafte Ausgestaltung des Erfindungsgedankens besteht darin, daß eine aus der unteren Schenkelplatte und/oder dem Randsteg vorspringende Nase, Zapfen od. dgl. mit einer entsprechenden Ausnehmung der plattenförmigen Mikrokomponente in Eingriff bringbar ist und den Längsanschlag bildet.

Nachfolgend werden Ausführungsbeispiele der Erfindung näher erläutert, die in der Zeichnung dargestellt sind.

Es zeigt:
Fig. 1 in räumlicher Darstellungsweise eine Anschlußkupplung für plattenförmige Mikrokomponenten,
Fig. 2 in räumlicher Darstellungsweise den Zusammenbau mit einer plättchenförmigen Mikrokomponente,
Fig. 3 eine abgewandelte Ausführungsform der Anschlußkupplung nach Fig. 1,
Fig. 4 eine weitere abgewandelte Ausführungsform der Anschlußkupplung mit zwei Leitungsanschlüssen,
Fig. 5 eine Ausführungsform einer Anschlußkupplung mit je einer Endwand als Längsanschlag und Queranschlag
Fig. 6 eine Draufsicht auf die Anschlußkupplung nach Fig. 5

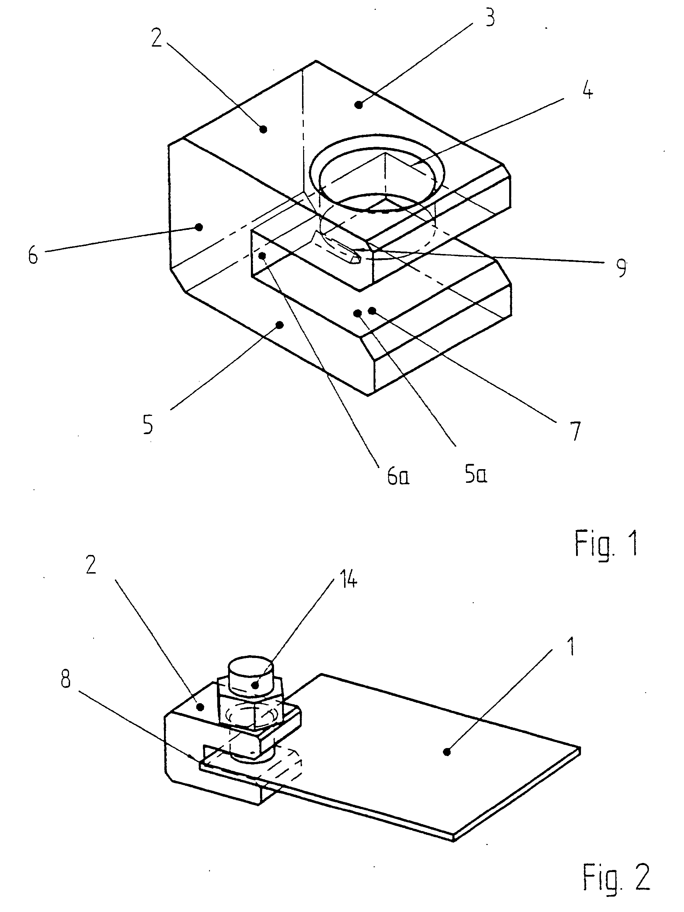

Die in Fig. 1 dargestellte Anschlußkupplung dient dazu, einen mit Außengewinde versehenen Leitungsanschluß (14), in dichte Verbindung mit einer Anschlußbohrung einer plättchenförmigen Mikrokomponente 1 zu bringen. Ein im Querschnitt im wesentlichen ü-förmiger Kupplungskörper 2, der vorzugsweise einstückig aus Metall oder Kunststoff hergestellt ist, weist eine obere Schenkelplatte 3 auf, in der sich eine Gewindebohrung 4 quer zur Plattenebene der Mikrokomponenten 1 erstreckt. In die Gewindebohrung 4 wird der mit Außengewinde versehene Leitungsanschluß (14) angeschraubt, um seine Leitungsöffnung gegen die Anschlußbohrung in der Oberfläche der plättchenförmigen Mikrokomponente 1 zu pressen.

Die obere Schenkelplatte 3 ist an ihrem einen Rand mit einer parallel und im Abstand hierzu angeordneten unteren Schenkelplatte 5 über einen Randsteg 6 biegesteif verbunden. Die anzuschließende Mikrokomponente 1 ist so im Zwischenraum 7 zwischen der oberen Schenkelplatte 3 und der unteren Schenkelplatte 5 aufgenommen, daß ihre eine Kante 8 an der Innenfläche 6a des Randstegs 6 anliegt. Diese Innenfläche 6a bildet somit einen Queranschlag für die Mikrokomponente 1.

Rechtwinklig hierzu, d. h. in Längsrichtung, wird die Mikrokomponente 1 bei dem in Fig. 1 dargestellten Ausführungsbeispiel durch eine Nase 9 oder Leiste zentriert, die aus der Oberseite 5a der unteren Schenkelplatte 5 vorspringt und mit einer entsprechenden Ausnehmung an der Unterseite der plattenförmigen Mikrokomponente in Eingriff tritt. Die Mikrokomponente 1 ist damit in Längsrichtung und Querrichtung gegenüber dem Anschlußkörper 2 festgelegt, so daß eine genaue Positionierung des Leitungsanschlusses in Bezug auf die zugeordnete Anschlußbohrung der Mikrokomponente 1 gewährleistet ist. Abweichend von dem dargestellten Ausführungsbeispiel kann anstelle der gezeigten Nase 9 oder zusätzlich zu dieser auch eine Nase oder ein anderer Vorsprung an der Innenfläche 6a des Randstegs 6 vorgesehen sein, um mit einer entsprechend geformten Randkerbe der plattenförmigen Mikrokomponente in Eingriff zu treten.

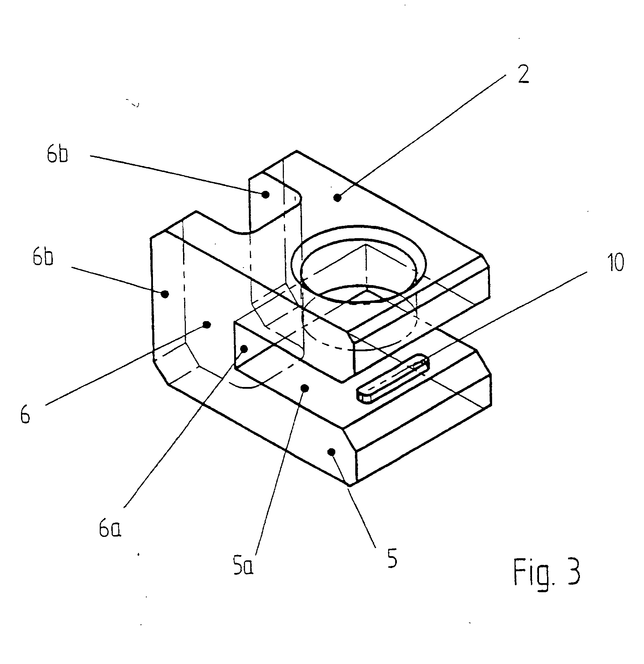

Das in Fig. 3 dargestellte Ausführungsbeispiel unterscheidet sich von dem Ausführungsbeispiel nach Fig. 1 im wesentlichen dadurch, daß aus der Oberseite 5a der unteren Schenkelplatte 5 ein länglicher Zapfen 10 vorspringt, der in eine entsprechende, bspw. durch Ätzen hergestellte Ausnehmung an der Unterseite der plattenförmigen Mikrokomponente 1 greift und den Längsanschlag für die Mikrokomponente 1 bildet. Der Zapfen 10 kann zugleich auch den Queranschlag bilden. Stattdessen - oder zusätzlich - kann aber auch hier die Innenseite 6a des Randstegs 6 in der schon beschriebenen Weise den Queranschlag bilden. Zusätzlich stellt der Eingriff des Zapfens 10 an der Mikrokomponente 1 sicher, daß beim Anschrauben nicht unbeabsichtigt eine Lageveränderung der Kante 8 von der Innenseite 6a erfolgt.

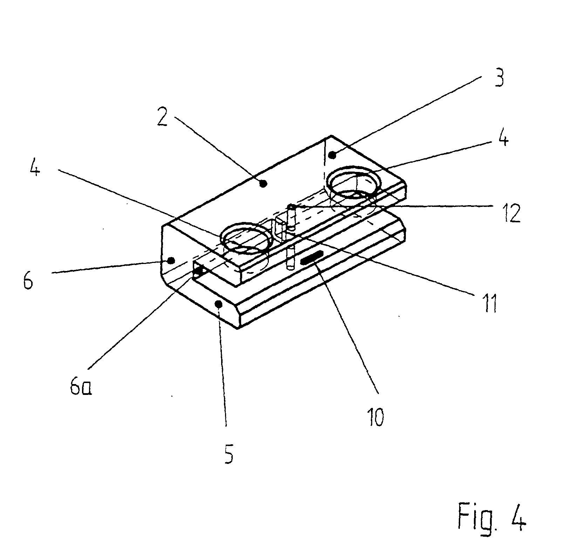

In Fig. 3 ist außerdem gezeigt, daß zur Vermeidung einer unerwünschten Aufbiegung des U-förmigen Kupplungskörpers 2 an der der Innenseite 6a abgekehrten Außenseite des Randstegs 6 Versteifungsrippen 6b vorgesehen sein können.
Am Beispiel nach Fig. 4 ist gezeigt, daß in der oberen Schenkelplatte 3 des Kupplungskörpers 2 bspw. auch zwei Gewindebohrungen 4 vorgesehen werden können, um zwei Leitungsanschlüsse anzubringen. Als Alternativen für den Längsanschlag sind in Fig. 3 ein plattenförmiges Einlegeteil 11 im Bereich der Innenseite 6a des Randstegs 6 oder ein eingesetzter Stift 12 dargestellt.

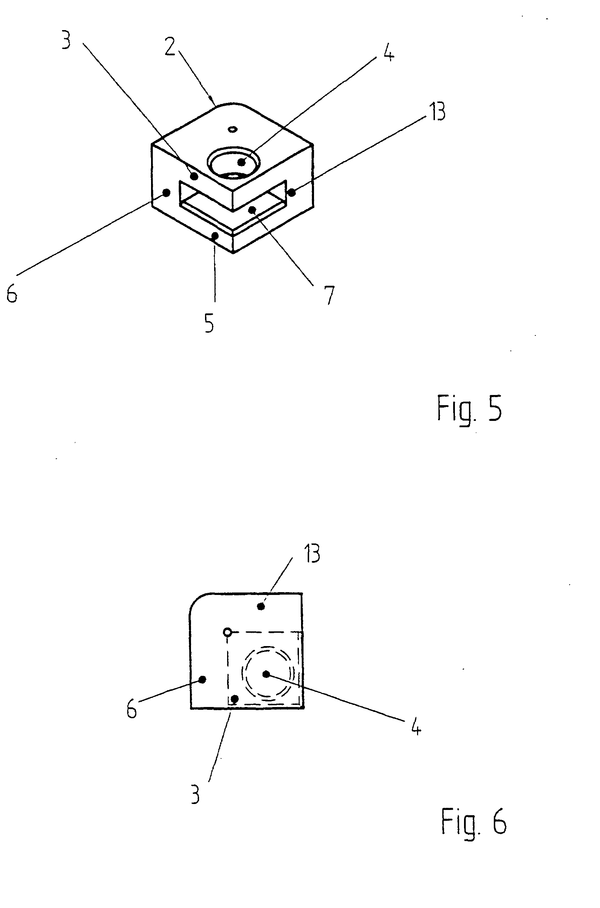

Beim Ausführungsbeispiel nach Fig. 5 und 6 weist der im Querschnitt im wesentlichen U-förmige Kupplungskörper 2 zusätzlich zu seinem Randsteg 6 eine im rechten Winkel dazu verlaufend Endwand 13 auf, die ebenso wie der Randsteg 6 eine kraftübertragende Verbindung der oberen Schenkelplatte 3 mit der unteren Schenkelplatte 5 bildet. Dadurch wird die Gefahr eines Aufbiegens des Kupplungskörpers 2 unter der Wirkung der Einschraubkraft der Leistungsanschlüsse wesentlich verringert und die Lage der plättchenförmigen

Mikrokomponenten über die gebildete Ecke eindeutig festgelegt. Dies ermöglichst es, zur Festlegung der Anschlußkupplung an der plattenförmigen Mikrokomponente 1 eine verhältnismäßig hohe Klemmkraft aufzubringen, ohne daß dadurch eine unzulässige Verformung der Anschlußkupplung auftritt.

## Patentansprüche

1. Anschlußkupplung für plattenförmige Mikrokomponenten, mit mindestens einem Leitungsanschluß für flüssige oder gasförmige Stoffe, **dadurch gekennzeichnet, daß** ein im Querschnitt im wesentlichen U-förmiger Kupplungskörper (2) in einer oberen Schenkelplatte (3) eine den Leitungsanschluß(14) aufnehmende Gewindebohrung (4) aufweist, daß ein Randsteg (6) die obere Schenkelplatte (3) mit einer parallel und mit Abstand angeordneten unteren Schenkelplatte (5) biegesteif verbindet, und daß Anschlagmittel (6a,7-13) zur Positionierung der plattenförmigen Mikrokomponente (1) vorgesehen sind, die zwischen der oberen Schenkelplatte (3) und der unteren Schenkelplatte (5) aufnehmbar ist.

2. Anschlußkupplung nach Anspruch 1, **dadurch gekennzeichnet, daß** die Innenfläche (6a) des Randstegs (6) einen Queranschlag für eine Kante (8) der plattenförmigen Mikrokomponente (1) bildet und daß mindestens ein weiteres Anschlagmittel (7-13) als Längsanschlag vorgesehen ist.

3. Anschlußkupplung nach Anspruch 2, **dadurch gekennzeichnet, daß** eine sich rechtwinklig zum Randsteg (6) erstreckende Endwand (13) des Kupplungskörpers (2) den Längsanschlag für eine Kante der plattenförmigen Mikrokomponente bildet.

4. Anschlußkupplung nach Anspruch 3, **dadurch gekennzeichnet, daß** die Endwand (13) eine kraftübertragende Verbindung der oberen Schenkelplatte (3) mit der unteren Schenkelplatte (5) bildet.

5. Anschlußkupplung nach Anspruch 2, **dadurch gekennzeichnet, daß** eine aus der unteren Schenkelplatte (5) und/oder dem Randsteg (6) vorspringende Nase (9), Zapfen (10) od. dgl. mit einer entsprechenden Ausnehmung der plattenförmigen Mikrokomponente (1) in Eingriff bringbar ist und den Längsanschlag bildet.

## Claims

1. Connection coupling for microcomponents in plate form, having at least one line connection for liquid or gaseous substances, **characterized in that** a coupling body (2), which is substantially U-shaped in cross section, in an upper limb plate (3) has a threaded bore (4), which accommodates the line connection (14), **in that** an edge web (6) connects the upper limb plate (3) in a flexurally rigid manner to a lower limb plate (5) which is arranged parallel to and at a distance from the upper limb plate, and **in that** stop means (6a, 7-13) are provided for the purpose of positioning the plate-like microcomponent (1), which can be accommodated between the upper limb plate (3) and the lower limb plate (5).

2. Connection coupling according to Claim 1, **characterized in that** the inner face (6a) of the edge web (6) forms a transverse stop for one edge (8) of the plate-like microcomponent (1), and **in that** at least one further stop means (7-13) is provided as a longitudinal stop.

3. Connection coupling according to Claim 2, **characterized in that** an end wall (13), which extends at right angles to the edge web (6), of the coupling body (2) forms the longitudinal stop for one edge of the plate-like microcomponent.

4. Connection coupling according to Claim 3, **characterized in that** the end wall (13) forms a force-transmitting connection between the upper limb plate (3) and the lower limb plate (5).

5. Connection coupling according to Claim 2, **characterized in that** a lug (9), peg (10) or the like, which projects out of the lower limb plate (5) and/or the edge web (6), can be brought into engagement with a corresponding recess in the plate-like microcomponent (1) and forms the longitudinal stop.

## Revendications

1. Couplage par connexion pour des microcomposants en forme de plaque, comportant au moins une connexion de ligne pour des substances liquides ou gazeuses, **caractérisé en ce qu'**un corps de couplage (2), d'une section en coupe essentiellement en forme de U, comporte, dans une plaque de bras supérieure (3), un trou taraudé (4) recevant la connexion de ligne (14), **en ce qu'**une bande de bord (6) connecte la plaque de bras supérieure (3) d'une manière rigide en flexion à une plaque de bras inférieure (5) qui est agencée en parallèle à la plaque de bras supérieure et à une certaine distance par rapport à celle-ci, et **en ce que** des moyens de butée (6a,7-13) sont prévus pour positionner le microcomposant en forme de plaque (1), lequel peut être reçu entre la plaque de bras supérieure (3) et la plaque de bras inférieure (5).

2. Couplage par connexion selon la revendication 1, **caractérisé en ce que** la face interne (6a) de la bande de bord (6) forme une butée transversale pour un bord (8) du microcomposant en forme de plaque (1), et **en ce qu'**au moins un autre moyen de butée (7-13) est prévu en tant que butée longitudinale.

3. Couplage par connexion selon la revendication 2, **caractérisé en ce qu'**une paroi d'extrémité (13), qui s'étend perpendiculairement à la bande de bord (6), du corps de couplage (2) forme le butée longitudinale pour un bord du microcomposant en forme de plaque.

4. Couplage par connexion selon la revendication 3, **caractérisé en ce que** la paroi d'extrémité (13) forme une connexion de transmission de force de la plaque de bras supérieure (3) sur la plaque de bras inférieure (5).

5. Couplage par connexion selon la revendication 2, **caractérisé en ce qu'**une protubérance (9), une clavette (10) ou similaire qui fait saillie depuis la plaque de bras inférieure (5) et/ou la bande de bord (6) peut être amenée en coopération avec un évidement correspondant dans le microcomposant en forme de plaque (1) et forme le butée longitudinale.
